(19) Europäisches Patentamt
European Patent Office
Office européen des brevets

(11) **EP 4 729 989 A1**

(12) **EUROPEAN PATENT APPLICATION**
published in accordance with Art. 153(4) EPC

(43) Date of publication:
**22.04.2026 Bulletin 2026/17**

(21) Application number: **24825586.1**

(22) Date of filing: **09.05.2024**

(51) International Patent Classification (IPC):
**G01S 17/86** (2020.01)    **G01P 21/02** (2006.01)
**G01S 19/47** (2010.01)    **G01S 19/49** (2010.01)

(52) Cooperative Patent Classification (CPC):
**G01P 21/02; G01S 17/86; G01S 19/47; G01S 19/49**

(86) International application number:
**PCT/JP2024/017251**

(87) International publication number:
**WO 2024/262177 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.06.2023 JP 2023099919**

(71) Applicant: **Hitachi, Ltd.
Tokyo 100-8280 (JP)**

(72) Inventors:
• **IKEDA, Naohiro
Tokyo 100-8280 (JP)**
• **MORITA, Kazuki
Tokyo 100-8280 (JP)**
• **IMAMOTO, Kenji
Tokyo 100-8280 (JP)**
• **ONO, Yukihiko
Tokyo 100-8280 (JP)**

(74) Representative: **MERH-IP Matias Erny Reichl
Hoffmann
Patentanwälte PartG mbB
Paul-Heyse-Straße 29
80336 München (DE)**

(54) **DETECTING DEVICE AND DETECTING METHOD**

(57)    A detection device including: an acquisition unit that acquires measurement results from a GNSS 11 for locating a vehicle via satellite communication, a LiDAR 12 for calculating the distance between the vehicle and an object using laser light, and an IMU 13 for measuring the acceleration of the vehicle; and an estimation unit that obtains confidence intervals, as reliable ranges, for at least one of a vehicle velocity and a vehicle position on the basis of the measurement results, and sets a value included in a range in which the respective confidence intervals overlap as the estimated value. Thus, it is possible to provide a detection device and a detection method for maintaining the reliability, safety and accuracy of the position and velocity estimation results based on sensor outputs even under environmental influences.

FIG. 1

## Description

Technical Field

The present invention relates to a detection device and a detection method for recognizing the velocity state and position of a vehicle.

Background Art

Conventionally, the velocity and position of railway vehicles have been detected by a method using a tachometer generator and a ground coil for position correction. In other words, the processing involves reading location information when the vehicle passes the ground coil, and then calculating the vehicle's position by accumulating the product of the velocity data periodically acquired from the tachometer generator and the acquisition period into the previously read location information. However, this method has problems with the velocity value when the vehicle's wheels are slipping or skidding.

In response to this, new methods for estimating vehicle position and velocity using satellite positioning such as the Global Positioning System (GPS) and inertial sensors have been researched in recent years. With this method, the vehicle's position is estimated by receiving satellite positioning signals such as GPS and a Global Navigation Satellite System (GNSS). Furthermore, in environments where satellite communication conditions deteriorate further, the position is corrected by accumulating the velocity estimates from the inertial sensor along the time axis. Meanwhile, methods that utilize satellite communications and laser sensors are being researched as alternative positioning methods to ground coils and tachometer generators.

Patent Literature 1 describes a vehicle position detection device including a position detection unit that detects the position of a vehicle on the basis of the rotational velocity information of an axle, a position estimation unit that inputs a satellite positioning system signal and velocity-related information (velocity, acceleration) of the vehicle every unit time to sequentially estimate the position of the vehicle, and a feasibility determination unit that determines whether or not position correction is possible. In accordance with the determination result of the feasibility determination unit, the position detected by the position detection unit is corrected on the basis of the position estimated by the position estimation unit.

Citation List

Patent Literature

Patent Literature 1: Japanese Unexamined Patent Application Publication No. 2021-160468

Summary of Invention

Technical Problem

Satellite positioning signals are often subject to poor communication conditions due to the surrounding environmental influences (such as tunnels and tall buildings), and the desired accuracy cannot be obtained. In addition, although position estimation is corrected using velocity-related information when satellite communication conditions deteriorate, there is a problem of continued deterioration in the accuracy of position and velocity estimation results in the event of failure of satellite communication receivers or sensors that output velocity.

Meanwhile, positioning methods that use satellite communications or laser sensors may suffer from poor positioning results and accuracy due to external environmental influences including satellite constellation, communication obstructions such as surrounding buildings and tunnels, weather, and the presence or absence of surrounding feature objects. Therefore, measures are needed to improve the reliability and safety of the vehicle position and velocity estimation function and accuracy.

The present invention aims to provide a detection device and a detection method whereby it is possible to maintain the reliability, safety, and accuracy of position and velocity estimation results based on sensor outputs even under environmental influences.

Solution to Problem

In order to address the above-mentioned problems, the present invention provides a detection device including: an acquisition unit that acquires measurement results from a positioning sensor for locating a vehicle via satellite communication, a distance sensor for calculating a distance between the vehicle and an object using laser light, and an acceleration sensor for measuring acceleration of the vehicle; and an estimation unit that obtains confidence intervals, as reliable ranges, for at least one of a vehicle velocity and a vehicle position on the basis of the measurement results, and sets a value included in a range in which the respective confidence intervals overlap as the estimated value. In this case, the provided detection device is capable of maintaining the reliability, safety, and accuracy of position and velocity estimation results based on sensor outputs even under environmental influences.

Here, when estimating the vehicle velocity, the estimation unit may calculate a weighted average in accordance with the confidence intervals for velocities obtained from the measurement results of the positioning sensor, the distance sensor, and the acceleration sensor, and set the weighted average as the estimated vehicle velocity. In this case, the accuracy of the estimated value is improved.

Furthermore, when estimating the vehicle position, the estimation unit may calculate a weighted average in accordance with the confidence intervals for the positioning sensor, the distance sensor, and the estimated vehicle velocity, and set the weighted average as the estimated vehicle position. In this case, the accuracy of the estimated value is further improved.

Further, the estimation unit may obtain a weight in accordance with a proportion of the overlapping range of the confidence intervals within each of the confidence intervals, and calculate a weighted average. In this case, the weights can be calculated with high accuracy.

Moreover, the estimation unit may obtain each of the confidence intervals using a mean value and a standard deviation, for the vehicle velocity or the vehicle position to be estimated, the mean value and standard deviation being calculated based on each of the measurement results. In this case, a confidence interval with a statistical basis can be calculated.

In addition, if the confidence intervals do not overlap, the estimation unit may set, as the estimated value, a maximum value among values with a difference from a previously estimated value equal to or smaller than a predetermined upper limit. In this case, it is possible to eliminate invalid estimated values.

Additionally, when estimating the vehicle velocity, the upper limit may be a value obtained by adding a velocity when the vehicle accelerates at a maximum acceleration to the previously estimated value or a value obtained by subtracting a velocity when the vehicle decelerates at a maximum deceleration from the previously estimated value, and when estimating the vehicle position, the upper limit may be a value obtained by adding a position when the vehicle accelerates at the maximum acceleration to the previously estimated value or a value obtained by subtracting a position when the vehicle decelerates at the maximum deceleration from the previously estimated value. In this case, a more appropriate value can be set as the upper limit.

The present invention also provides a detection method implemented by a processor executing a program stored in memory, the method including: acquiring measurement results from a positioning sensor for locating a vehicle via satellite communication, a distance sensor for calculating a distance between the vehicle and an object using laser light, and an acceleration sensor for measuring acceleration of the vehicle; and obtaining confidence intervals, as reliable ranges, for at least one of a vehicle velocity and a vehicle position on the basis of the measurement results, and setting a value included in a range in which the respective confidence intervals overlap as the estimated value. In this case, the provided detection method is capable of maintaining the reliability, safety, and accuracy of position and velocity estimation results based on sensor outputs even under environmental influences.

Advantageous Effects of Invention

The present invention is capable of providing a detection device and a detection method whereby it is possible to maintain the reliability, safety, and accuracy of position and velocity estimation results based on sensor outputs even under environmental influences.

Brief Description of Drawings

FIG. 1 is a block diagram illustrating the functional configuration of a self-position estimation device according to an embodiment of the present invention.
FIG. 2 is a block diagram illustrating the processing operation of a velocity estimation unit in FIG. 1.
FIG. 3 is a block diagram illustrating the processing operation of a position estimation unit in FIG. 1.
FIG. 4 is a flowchart illustrating the processing content performed by the velocity estimation unit.
FIG. 5 is a flowchart illustrating the processing content of the position estimation unit.

Description of Embodiments

[First Embodiment]

Next, a vehicle self-position estimation device according to embodiments of the present invention will be described with reference to the drawings.

Here, a self-position estimation device according to a first embodiment will be described first. In the first embodiment, a velocity estimation result and a position estimation result are obtained using three types of sensors, namely, a GNSS, a LiDAR, and an IMU (acceleration sensor).

<Description of Overall Configuration of self-position Estimation Device 1>

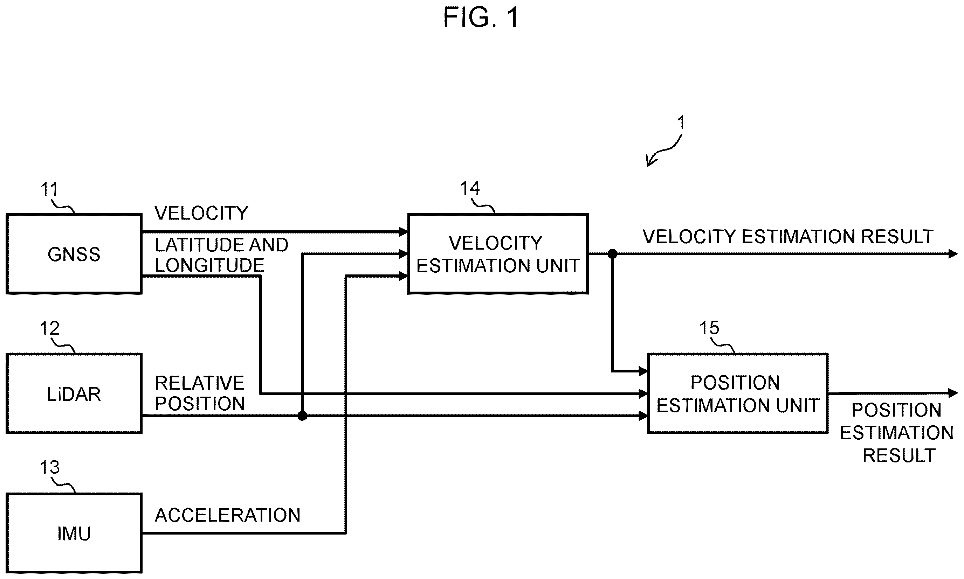

FIG. 1 is a block diagram illustrating the functional configuration of a self-position estimation device 1 according to the present embodiment.

The self-position estimation device 1 illustrated in the figure is an example of a detection device that is provided in a train vehicle and detects at least one of the vehicle's velocity and position. The self-position estimation device 1 includes sensors such as a Global Navigation Satellite System (GNSS) 11, a Light Detection And Ranging (LiDAR) 12, and an Inertial Management Unit (IMU) 13. The self-position estimation device 1 also includes a velocity estimation unit 14 and a position estimation unit 15.

The GNSS 11 is a positioning sensor for locating a train via satellite communication. The GNSS 11 provides velocity information Vgi based on the Doppler frequency of satellite radio waves, and latitude and longitude position information Xgi through satellite positioning.

The LiDAR 12 is a distance sensor for calculating the distance between the train and an object using laser light. The LiDAR 12 is a sensor that calculates the relative distance between the vehicle itself and any object, from the difference between the transmission time of the laser light emitted by the sensor itself and the reception time of the light reflected by the object. Point cloud data Xl, which is a collection of intensity data of the laser light reflected by the object, is transmitted from the LiDAR 12. In this case, the object is not limited to any particular object, but may be a structure or the like that exists in the vicinity of the vehicle and is located on the ground. Examples include utility poles, buildings, equipment, rails, sleepers, and overhead contact lines.

The IMU 13 is an acceleration sensor that measures the acceleration of the train. The IMU 13 outputs acceleration data Ai and angular velocity information.

The velocity estimation unit 14 acquires the velocity information from the GNSS 11, the point cloud data Xl indicating the relative position from the LiDAR 12, and the acceleration data Ai from the IMU 13, performs processing for each of the sensors, which will be described later, estimates the velocity, and outputs the velocity estimation result.

The position estimation unit 15 acquires the latitude and longitude position information from the GNSS 11, the point cloud data Xl indicating the relative position from the LiDAR 12, and the velocity estimation result Ves from the velocity estimation unit 14, performs processing on each of the input data, which will be described later, estimates the position, and outputs the position estimation result.

<Outline of Processing of Velocity Estimation Unit 14>

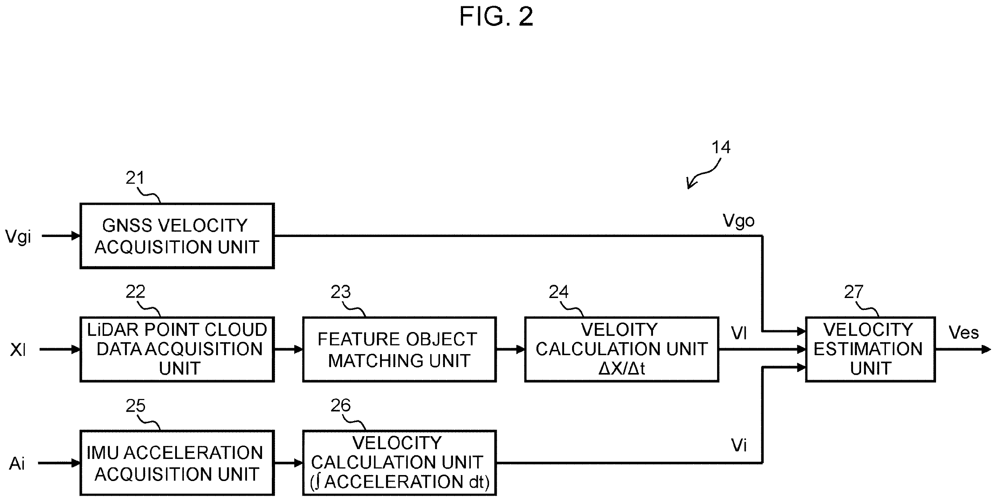

FIG. 2 is a block diagram illustrating the processing operation of the velocity estimation unit 14 in FIG. 1.

The velocity estimation unit 14 is an example of an estimation unit, and includes a GNSS velocity acquisition unit 21, a LiDAR point cloud data acquisition unit 22, a feature object matching unit 23, a velocity calculation unit 24, an IMU acceleration acquisition unit 25, a velocity calculation unit 26, and a velocity estimation unit 27.

The GNSS velocity acquisition unit 21 acquires the velocity information Vgi from the GNSS 11, performs processing such as noise reduction filtering, and outputs the result as velocity information Vgo to the velocity estimation unit 27.

The LiDAR point cloud data acquisition unit 22 acquires the point cloud data Xl from the LiDAR 12 and performs processing such as noise reduction filtering.

The feature object matching unit 23 extracts a pattern having a specific shape in reflection intensity from the point cloud data Xl received through successive sampling processing, and identifies any feature object.

The velocity calculation unit 24 calculates velocity by dividing the amount of change $\Delta X$ in relative position at each sampling time of the point cloud data Xl of the feature object having a specific shape by a sampling period $\Delta t$, and outputs the result as velocity information Vl to the velocity estimation unit 27.

The IMU acceleration acquisition unit 25 acquires the acceleration data Ai from the IMU 13 and performs processing such as noise reduction filtering.

The velocity calculation unit 26 calculates velocity by performing integration in sampling period units, and outputs the result as velocity information Vi to the velocity estimation unit 27.

The velocity estimation unit 27 outputs the velocity estimation result Ves on the basis of the velocity information Vgo output by the GNSS velocity acquisition unit 21, the velocity information Vl output by the velocity calculation unit 24, and the velocity information Vi output by the velocity calculation unit 26. The detailed operation of the velocity estimation unit 27 will be described later.

Note that the GNSS velocity acquisition unit 21, the LiDAR point cloud data acquisition unit 22, and the IMU acceleration acquisition unit 25 function as an acquisition units that acquire the measurement results of the GNSS 11, the LiDAR 12, and the IMU 13, respectively.

<Outline of Processing of Position Estimation Unit 15>

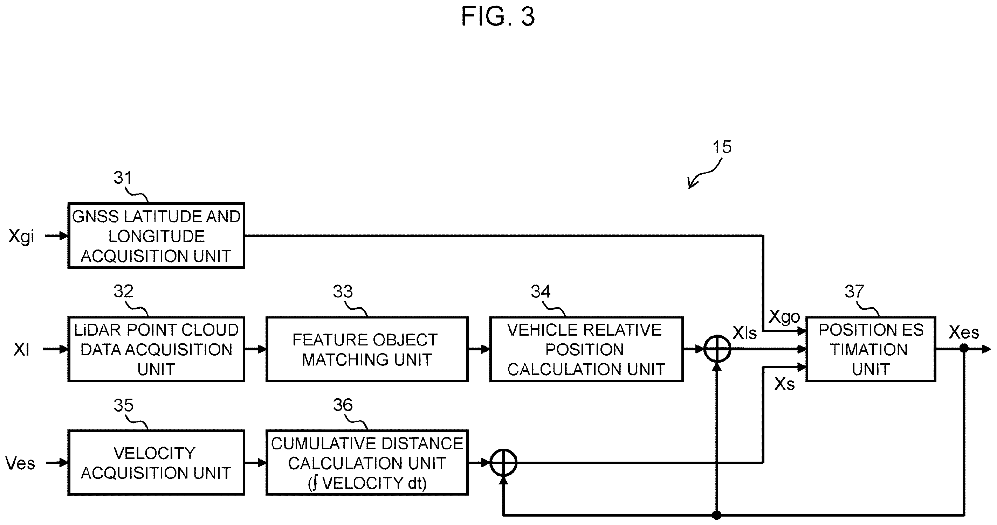

FIG. 3 is a block diagram illustrating the processing operation of the position estimation unit 15 in FIG. 1.

The position estimation unit 15 is an example of an estimation unit, and includes a GNSS latitude and longitude acquisition unit 31, a LiDAR point cloud data acquisition unit 32, a feature object matching unit 33, a vehicle relative position calculation unit 34, a velocity acquisition unit 35, a cumulative distance calculation unit 36, and a position estimation unit 37.

The GNSS latitude and longitude acquisition unit 31 acquires the latitude and longitude position information Xgi from the GNSS 11, performs processing such as noise reduction filtering, and outputs the result as position information Xgo to the position estimation unit 37.

The LiDAR point cloud data acquisition unit 32 acquires the point cloud data Xl from the LiDAR 12 and performs processing such as noise reduction filtering.

The feature object matching unit 33 extracts a pattern having a specific shape in reflection intensity from the point cloud data Xl received through successive sampling processing, and identifies any feature object.

The vehicle relative position calculation unit 34 calculates the relative position of the vehicle to the feature object by taking the product of the difference between the transmission time of the laser beam and the reception time of the reflected wave and the traveling velocity of the laser beam (≈ the velocity of light). The vehicle relative position calculation unit 34 then feeds back and adds position estimation result Xes output by the position estimation unit 37 in the previous processing, and outputs absolute position information Xls, which is the cumulative position, to the position estimation unit 37.

The velocity acquisition unit 35 acquires the velocity estimation result Ves from the velocity estimation unit 14.

The cumulative distance calculation unit 36 calculates the relative movement distance between the sampling times by multiplying the velocity information calculated at each sampling time by the sampling period. The velocity acquisition unit 35 then feeds back and adds the position estimation result Xes output by the position estimation unit 37 in the previous processing, and outputs absolute position information Xs, which is the cumulative distance, to the position estimation unit 37.

The position estimation unit 37 outputs the position estimation result Xes on the basis of the position information Xgo output by the GNSS latitude and longitude acquisition unit 31, the absolute position information Xls output by the vehicle relative position calculation unit 34, and the absolute position information Xs output by the cumulative distance calculation unit 36. The detailed operation of the position estimation unit 37 will be described later.

<Description of Processing Content of Velocity Estimation Unit 27>

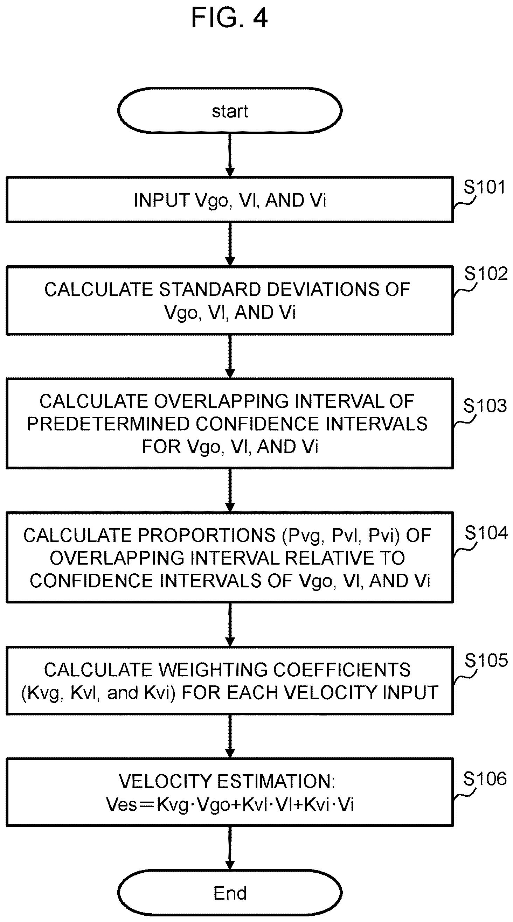

FIG. 4 is a flowchart illustrating the processing content performed by the velocity estimation unit 27.

First, the velocity estimation unit 27 acquires the velocity information Vgo, Vl, and Vi calculated from the sensor data from the GNSS 11, the LiDAR 12, and the IMU 13, respectively (S101).

Next, the velocity estimation unit 27 calculates the standard deviations of the velocity information Vgo, Vl, and Vi (S102).

Then the velocity estimation unit 27 obtains confidence intervals for the velocity information Vgo, Vl, and Vi on the basis of the respective standard deviations. Further, the velocity estimation unit 27 identifies the range where the confidence intervals of the velocity information Vgo, Vl, and Vi overlap (S103). For example, if the mean values and deviations of the velocity information Vgo, Vl, and Vi are calculated to obtain the range where their confidence intervals overlap, the result is as follows. In this case, the confidence intervals for the velocity information Vgo, Vl, and Vi are each set to a range of $\pm 1\sigma$ from the mean value.

Vgo: Mean value 61km/h

Standard deviation 1.5km/h
Confidence interval 59.5km/h to 62.5km/h

Vl: Mean value 60km/h

Standard deviation 2.5km/h
Confidence interval 57.5km/h to 62.5km/h

Vi: Mean value 60.5km/h

Standard deviation 0.8km/h
Confidence interval 59.7km/h to 61.3km/h

Confidence interval overlap 59.7km/h to 61.3km/h

Next, the velocity estimation unit 27 calculates the proportions (Pvg, Pvl, Pvi) of the overlapping range within the confidence intervals for the velocity information Vgo, Vl, and Vi calculated from the respective sensors (S104). Explaining based on the above example, the proportions of the overlapping interval within the confidence intervals for the velocity information Vgo, Vl, and Vi can be obtained as follows.

Vgo: Confidence interval 59.5km/h to 62.5km/h Proportion of overlapping interval (61.3-59.7)/(62.5-59.5)=0.53

Vl: Confidence interval 57.5km/h to 62.5km/h Proportion of overlapping interval (61.3-59.7)/(62.5-57.5)=0.32

Vi: Confidence interval 59.7km/h to 61.3km/h Proportion of overlapping interval (61.3-59.7)/(61.5-59.7)=1.00

Then the velocity estimation unit 27 calculates weighting coefficients Kvg, Kvl, and Kvi for the velocity information Vgo, Vl, and Vi (S105). In the above example, the weighting coefficients are obtained as follows.

Kvg:

$$0.53/(0.53+0.32+1.00)=0.29$$

Kvl:

$$0.32/(0.53+0.32+1.00)=0.17$$

Kvi:

$$1.00/(0.53+0.32+1.00)=0.54$$

Based on the above weighting coefficients, the velocity estimation unit 27 obtains the velocity estimation result Ves as follows (S106).

$$Ves=Kvg \cdot Vgo+Kvl \cdot Vl+Kvi \cdot Vi=60.6 \ km/h$$

<Description of Processing Content of Position Estimation Unit 37>

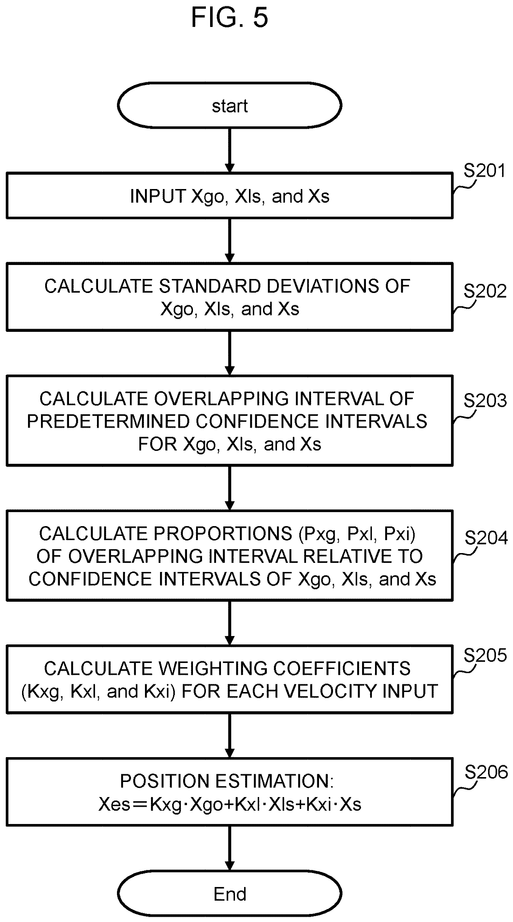

FIG. 5 is a flowchart illustrating the processing content of the position estimation unit 37.
First, the position estimation unit 37 acquires the position information Xgo and Xls from the sensor data of the GNSS 11 and the LiDAR 12, and also acquires the position information Xs obtained by integrating the velocity information output from the velocity estimation unit 14 (S201).
Next, the position estimation unit 37 calculates the standard deviations of the position information Xgo, Xls, and Xs (S202).

Then the position estimation unit 37 obtains confidence intervals for the position information Xgo, Xls, and Xs on the basis of the respective standard deviations. Further, the position estimation unit 37 identifies the range where the confidence intervals of the position information Xgo, Xls, and Xs overlap (S203). For example, if the mean values and deviations of the position information Xgo, Xls, and Xs are calculated to obtain the range where their confidence intervals overlap, the result is as follows. However, it is assumed that the latitude and longitude are converted into the cumulative distance in the direction of the track. In this case, the confidence intervals for the position information Xgo, Xls, and Xs are each set to a range of $\pm 1\sigma$ from the mean value.

Xgo: Mean value 30km

Standard deviation 0.04km
Confidence interval 29.96km to 30.04km

Xls: Mean value 29.95km

Standard deviation 0.05km
Confidence interval 29.90km to 30.00km

Xs: Mean value 30.05km

Standard deviation 0.07km
Confidence interval 29.98km to 30.12km

Confidence interval overlap 29.98km to 30.00km

Next, the position estimation unit 37 calculates the proportions (Pxg, Pxl, Pxi) of the overlapping range within the confidence intervals for the position information Xgo, Xls, and Xs calculated from the respective sensors (S204). Explaining based on the above example, the proportions of the overlapping interval relative to the confidence intervals for the position information Xgo, Xls, and Xs can be obtained as follows.

Xgo: Confidence interval Confidence interval 29.96km to 30.04km Proportion of overlapping interval (30.00-29.98)/(30.04-29.96)=0.25

Xls: Confidence interval 29.90km to 30.00km Proportion of overlapping interval (30.00-29.98)/(30.00-29.90)=0.2

Xs: Confidence interval 29.98km to 30.12km Proportion of overlapping interval (30.00-29.98)/(30.12-29.98)=0.14

Then the position estimation unit 37 calculates weighting coefficients Kxg, Kxl, and Kxi for the position information Xgo, Xls, and Xs (S205). In the above example, the weighting coefficients are obtained as follows.

Kxg:

$$0.25/(0.25+0.2+0.14)=0.42$$

Kxl:

$$0.2/(0.25+0.2+0.14)=0.34$$

Kxi:

$$0.14/(0.25+0.2+0.14)=0.24$$

Based on the above weighting coefficients, the position estimation result Xes is obtained as follows (S206).

$$Xes=Kxg \cdot Xgo+Kxl \cdot Xls+Kxi \cdot Xs=29.995km$$

In the first embodiment, on the basis of the measurement results of the GNSS 11, the LiDAR 12, and the IMU 13, confidence intervals are obtained as reliable ranges for at least one of the vehicle's velocity and position, and a value included in the range where the respective confidence intervals overlap is set as the estimated value.

In this case, when estimating the vehicle velocity, the velocity estimation unit 14 calculates a weighted average in accordance with the confidence intervals for the velocities obtained from the measurement results of the GNSS 11, the LiDAR 12, and the IMU 13, and sets the weighted average as the estimated vehicle velocity. At this time, the velocity estimation unit 14 obtains a confidence interval using the mean value and standard deviation of the vehicle velocity, which are calculated on the basis of the measurement results.

Meanwhile, when estimating the position of the vehicle, the position estimation unit 15 calculates a weighted average in accordance with the confidence intervals for the GNSS 11, the LiDAR 12, and the estimated vehicle velocity, and sets the weighted average as the estimated value. At this time, the position estimation unit 15 obtains a confidence interval using the mean value and standard deviation of the vehicle position, which are calculated on the basis of the measurement results.

Furthermore, the velocity estimation unit 14 and the position estimation unit 15 each obtain a weight in accordance with the proportion of the overlapping range of the confidence intervals within each of the confidence intervals, and calculate a weighted average.

[Second Embodiment]

Next, the vehicle self-position estimation device 1 according to a second embodiment of the present invention will be described.

In the processing flow of the velocity estimation unit 14 in FIG. 4, a case is also assumed where the overlap of the confidence intervals for the respective values of velocity information calculated from the three types of sensors is 0. This can occur in a situation such as where the satellite constellation of the GNSS 11 is poor and the surrounding area is surrounded by trees, resulting in a deterioration in communication with the satellites and incorrect recognition of the vehicle's position and velocity, and at the same time, the LiDAR 12 is unable to detect feature objects because only trees are present in the vicinity, and the accuracy of the IMU 13 deteriorates due to the influence of fluctuations in ambient temperature. In the second embodiment, the processing in such a case will be described.

It is considered that, before this situation, the velocity estimation unit 14 would have obtained highly reliable positioning results from two or more of the three types of sensors, and the confidence intervals would have continued to overlap. The fact that the confidence intervals of the three types of data then no longer overlap means that the positioning results from each sensor have progressively deviated over time.

In other words, when observing the time series data of the velocity calculation results, the results show a large deviation from the previous calculation results.

Meanwhile, vehicles such as trains and automobiles are made of moving metal housings with large masses, and there are physical limitations to their operating characteristics, making rapid movement in a short period of time impossible. In other words, there is an upper limit to the amount of movement per unit time.

Furthermore, there is a fail-safe concept in velocity estimation operation of trains and automobiles. In other words, safety in velocity control is ensured by setting the perceived velocity higher than the actual value.

Thus, in such a situation, the estimated vehicle velocity is the maximum value among the respective values of velocity information calculated from the three types of sensors, such that the difference from the previously calculated value does not exceed the upper limit obtained by adding or subtracting the vehicle's maximum acceleration or deceleration to/from the previously calculated velocity. This makes it possible to maintain the reliability and safety of the velocity estimation.

[Third Embodiment]

Next, the vehicle self-position estimation device 1 according to a third embodiment of the present invention will be described.

Similarly, in the processing flow of the position estimation unit in FIG. 5, the same idea is also applied to the case where the overlap of the confidence intervals of the three types of position information is zero. As described in the second embodiment, this can occur in a situation such as where the communication with satellites of the GNSS 11 deteriorates, the LiDAR 12 is unable to recognize feature objects, and the IMU 13 is affected by temperature fluctuations. In the third embodiment, the processing for such a case will be explained.

It is considered that, before this situation, the position estimation unit 15 had obtained highly reliable positioning results for two or more of the three types of position information calculation results, and that there had been overlapping confidence intervals. The fact that the confidence intervals of the three types of position information then no longer overlap means that the respective position information values have significantly deviated.

In other words, when observing the time series data of position calculation results, the results show a large deviation from the previous calculation results.

Thus, in such a situation, the estimated vehicle position is the maximum value among the three types of position information calculation results, such that the difference from the previously calculated value does not exceed the upper limit, which is a value that the vehicle could reach by moving at a velocity obtained by adding or subtracting the vehicle's maximum acceleration or deceleration to/from the previously calculated velocity. This makes it possible to maintain the reliability and safety of the position estimation.

In the second and third embodiments, if the confidence intervals do not overlap, the velocity estimation unit 14 and the position estimation unit 15 each set, as the estimated value, the maximum value among values with a difference from the previously estimated value is equal to or smaller than a predetermined upper limit.

When estimating the vehicle velocity, the upper limit is preferably a value obtained by adding the velocity when the vehicle accelerates at the maximum acceleration to the previously estimated value, or subtracting the velocity when the vehicle decelerates at the maximum deceleration from the previously estimated value. When estimating the vehicle position, the upper limit is preferably a value obtained by adding the position when the vehicle accelerates at the maximum acceleration to the previously estimated value, or subtracting the position when the vehicle decelerates at the maximum deceleration from the previously estimated value.

Note that in the embodiment detailed above, the confidence intervals for the velocity information Vgo, Vl, and Vi and for the position information Xgo, Xls, and Xs are each set to a range of $\pm 1\sigma$ from the mean value, but are not limited thereto. For example, the range may be $\sigma \pm 2\sigma$ or $\pm 3\sigma$.

According to the embodiment detailed above, the measurement results of the GNSS 11, the LiDAR 12, and the IMU 13 are not affected even if the wheels of the vehicle slip or skid. Therefore, errors in the estimated velocity and position are not caused by wheel slipping or skidding.

Furthermore, according to the embodiment detailed above, it is possible to provide a vehicle self-position estimation device that maintains the reliability, safety, and accuracy of the position and velocity estimation results based on the sensor outputs even under environmental influences. In addition, compared to the conventional method using a tachometer generator and a ground coil for position correction, the embodiment detailed above also has the advantage that no construction or outfitting costs are incurred for installing the ground coil or the speed sensor.

<Description of Detection Method>

The above-described processing performed by the self-position estimation device 1 is implemented by the cooperation of software and hardware resources. That is, a processor inside a computer provided in the self-position estimation device 1 loads software for implementing each of the above-described functions into memory and executes the software to implement each of these functions.

Therefore, the processing performed by the self-position estimation device 1 can be considered as a detection method in which the processor executes a program recorded in memory to acquire measurement results from a positioning sensor for locating a vehicle via satellite communication, a distance sensor for calculating the distance between the vehicle and an object using laser light, and an acceleration sensor for measuring the acceleration of the vehicle, obtains a confidence interval as a reliable range for at least one of the vehicle's velocity and position on the basis of the measurement results, and sets a value included in a range where the respective confidence intervals overlap as an estimated value.

While the present embodiments have been described above, the technical scope of the present invention is not limited to the scope described in the above embodiments. It is clear from the description of the claims that various modifications or improvements to the above-described embodiments are also included within the technical scope of the present invention.

List of Reference Signs

1: self-position estimation device
11: GNSS
12: LiDAR

13:     IMU
14:     velocity estimation unit
15:     position estimation unit
21:     GNSS velocity acquisition unit
22:     LiDAR point cloud data acquisition unit
23:     feature object matching unit
24:     velocity calculation unit
25I:    MU acceleration acquisition unit
26:     velocity calculation unit
27:     velocity estimation unit
31:     GNSS latitude and longitude acquisition unit
32:     LiDAR point cloud data acquisition unit
33:     feature object matching unit
34:     vehicle relative position calculation unit
35:     velocity acquisition unit
36:     cumulative distance calculation unit
37:     position estimation unit

**Claims**

1.  A detection device comprising:

    an acquisition unit that acquires measurement results from a positioning sensor for locating a vehicle via satellite communication, a distance sensor for calculating a distance between the vehicle and an object using laser light, and an acceleration sensor for measuring acceleration of the vehicle; and
    an estimation unit that obtains confidence intervals, as reliable ranges, for at least one of a vehicle velocity and a vehicle position on the basis of the measurement results, and sets a value included in a range in which the respective confidence intervals overlap as the estimated value.

2.  The detection device according to claim 1, wherein
    when estimating the vehicle velocity, the estimation unit calculates a weighted average in accordance with the confidence intervals for velocities obtained from the measurement results of the positioning sensor, the distance sensor, and the acceleration sensor, and sets the weighted average as the estimated vehicle velocity.

3.  The detection device according to claim 2, wherein
    when estimating the vehicle position, the estimation unit calculates a weighted average in accordance with the confidence intervals for the positioning sensor, the distance sensor, and the estimated vehicle velocity, and sets the weighted average as the estimated vehicle position.

4.  The detection device according to claim 2 or 3,
    wherein
    the estimation unit obtains a weight in accordance with a proportion of the overlapping range of the confidence intervals within each of the confidence intervals, and calculates a weighted average.

5.  The detection device according to claim 2 or 3,
    wherein
    the estimation unit obtains each of the confidence intervals using a mean value and a standard deviation for the vehicle velocity or the vehicle position to be estimated, the mean value and the standard deviation being calculated based on each of the measurement results.

6.  The detection device according to claim 1, wherein,
    if the confidence intervals do not overlap, the estimation unit sets, as the estimated value, a maximum value among values with a difference from a previously estimated value equal to or smaller than a predetermined upper limit.

7.  The detection device according to claim 6, wherein

    when estimating the vehicle velocity, the upper limit is a value obtained by adding a velocity when the vehicle accelerates at a maximum acceleration to the previously estimated value or a value obtained by subtracting a velocity when the vehicle decelerates at a maximum deceleration from the previously estimated value, and when estimating the vehicle position, the upper limit is a value obtained by adding a position when the vehicle accelerates at the maximum acceleration to the previously estimated value or a value obtained by subtracting a position when the vehicle decelerates at the maximum deceleration from the previously estimated value.

8. A detection method implemented by a processor executing a program stored in memory, the method comprising:

acquiring measurement results from a positioning sensor for locating a vehicle via satellite communication, a distance sensor for calculating a distance between the vehicle and an object using laser light, and an acceleration sensor for measuring acceleration of the vehicle; and
obtaining confidence intervals, as reliable ranges, for at least one of a vehicle velocity and a vehicle position on the basis of the measurement results, and setting a value included in a range in which the respective confidence intervals overlap as the estimated value.

**FIG. 1**

1

11 GNSS

12 LiDAR

13 IMU

VELOCITY

LATITUDE AND LONGITUDE

RELATIVE POSITION

ACCELERATION

14 VELOCITY ESTIMATION UNIT

VELOCITY ESTIMATION RESULT

15 POSITION ESTIMATION UNIT

POSITION ESTIMATION RESULT

EP 4 729 989 A1

# FIG. 2

# FIG. 3

POSITION ESTIMATION UNIT — 15

31 — GNSS LATITUDE AND LONGITUDE ACQUISITION UNIT (input Xgi, output Xgo)

32 — LiDAR POINT CLOUD DATA ACQUISITION UNIT (input Xl)

33 — FEATURE OBJECT MATCHING UNIT

34 — VEHICLE RELATIVE POSITION CALCULATION UNIT (output Xls)

35 — VELOCITY ACQUISITION UNIT (input Ves)

36 — CUMULATIVE DISTANCE CALCULATION UNIT ($\int$ VELOCITY dt)

37 — POSITION ESTIMATION UNIT (output Xes)

Xs

EP 4 729 989 A1

# FIG. 4

```
                    ┌──────────────┐
                    │    start     │
                    └──────────────┘
                           │
                           ▼
     ┌─────────────────────────────────────────┐  S101
     │           INPUT Vgo, Vl, AND Vi          │
     └─────────────────────────────────────────┘
                           │
                           ▼
     ┌─────────────────────────────────────────┐  S102
     │     CALCULATE STANDARD DEVIATIONS OF     │
     │              Vgo, Vl, AND Vi             │
     └─────────────────────────────────────────┘
                           │
                           ▼
     ┌─────────────────────────────────────────┐  S103
     │   CALCULATE OVERLAPPING INTERVAL OF      │
     │  PREDETERMINED CONFIDENCE INTERVALS      │
     │           FOR Vgo, Vl, AND Vi            │
     └─────────────────────────────────────────┘
                           │
                           ▼
     ┌─────────────────────────────────────────┐  S104
     │  CALCULATE PROPORTIONS (Pvg, Pvl, Pvi) OF│
     │   OVERLAPPING INTERVAL RELATIVE TO       │
     │  CONFIDENCE INTERVALS OF Vgo, Vl, AND Vi │
     └─────────────────────────────────────────┘
                           │
                           ▼
     ┌─────────────────────────────────────────┐  S105
     │     CALCULATE WEIGHTING COEFFICIENTS     │
     │  (Kvg, Kvl, and Kvi) FOR EACH VELOCITY INPUT│
     └─────────────────────────────────────────┘
                           │
                           ▼
     ┌─────────────────────────────────────────┐  S106
     │           VELOCITY ESTIMATION:           │
     │   Ves＝Kvg·Vgo+Kvl·Vl+Kvi·Vi             │
     └─────────────────────────────────────────┘
                           │
                           ▼
                    ┌──────────────┐
                    │     End      │
                    └──────────────┘
```

# FIG. 5

start

INPUT Xgo, Xls, and Xs — S201

CALCULATE STANDARD DEVIATIONS OF
Xgo, Xls, and Xs — S202

CALCULATE OVERLAPPING INTERVAL OF
PREDETERMINED CONFIDENCE INTERVALS
FOR Xgo, Xls, and Xs — S203

CALCULATE PROPORTIONS (Pxg, Pxl, Pxi)
OF OVERLAPPING INTERVAL RELATIVE TO
CONFIDENCE INTERVALS OF Xgo, Xls, and Xs — S204

CALCULATE WEIGHTING COEFFICIENTS
(Kxg, Kxl, and Kxi) FOR EACH VELOCITY INPUT — S205

POSITION ESTIMATION:
$Xes = Kxg \cdot Xgo + Kxl \cdot Xls + Kxi \cdot Xs$ — S206

End

## INTERNATIONAL SEARCH REPORT

| International application No. |
|---|
| **PCT/JP2024/017251** |

### A. CLASSIFICATION OF SUBJECT MATTER

***G01S 17/86***(2020.01)i; ***G01P 21/02***(2006.01)i; ***G01S 19/47***(2010.01)i; ***G01S 19/49***(2010.01)i
FI: G01S17/86; G01S19/47; G01S19/49; G01P21/02

According to International Patent Classification (IPC) or to both national classification and IPC

### B. FIELDS SEARCHED

Minimum documentation searched (classification system followed by classification symbols)

G01S 7 /00 - G01S 7/51, G01S 13/00 - G01S 13/95, G01S 17/00 - G01S 17/95, G01S 19/00 - G01S 19/55, G01P 21/00 - G01P 21/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2022-13929 A (BEIJING TUSIMPLE FUTURE TECH CO., LTD.) 18 January 2022 (2022-01-18)<br>paragraphs [0027]-[0028], [0030]-[0032] | 1-8 |
| A | JP 11-37776 A (DENSO CORPORATION) 12 February 1999 (1999-02-12)<br>abstract | 1-8 |
| A | CN 113596989 A (UNIVERSITY OF ELECTRONIC SCIENCE AND TECHNOLOGY OF CHINA) 02 November 2021 (2021-11-02)<br>paragraph [0082] | 1-8 |
| A | US 6907347 B2 (FORD GLOBAL TECHNOLOGIES, LLC) 14 June 2005 (2005-06-14)<br>entire text, all drawings | 1-8 |
| A | JP 2019-109222 A (SAMSUNG ELECTRONICS CO., LTD.) 04 July 2019 (2019-07-04)<br>entire text, all drawings | 1-8 |

| ✓ Further documents are listed in the continuation of Box C. | ✓ See patent family annex. |
|---|---|

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/017251**

C.     DOCUMENTS CONSIDERED TO BE RELEVANT

| Category* | Citation of document, with indication, where appropriate, of the relevant passages | Relevant to claim No. |
|---|---|---|
| A | US 2022/0377561 A1 (HERE GLOBAL B.V.) 24 November 2022 (2022-11-24)<br>entire text, all drawings | 1-8 |
| A | US 2007/0164897 A1 (LESKIW, Donald M.) 19 July 2007 (2007-07-19)<br>entire text, all drawings | 1-8 |

Form PCT/ISA/210 (second sheet) (July 2022)

**INTERNATIONAL SEARCH REPORT**
**Information on patent family members**

International application No.

**PCT/JP2024/017251**

| Patent document cited in search report | | | Publication date (day/month/year) | Patent family member(s) | | | Publication date (day/month/year) |
|---|---|---|---|---|---|---|---|
| JP | 2022-13929 | A | 18 January 2022 | US | 2022/0011448 | A1 | |
| | | | | paragraphs [0035]-[0036], [0038]-[0040] | | | |
| | | | | EP | 3943983 | A1 | |
| | | | | CN | 111812698 | A | |
| JP | 11-37776 | A | 12 February 1999 | (Family: none) | | | |
| CN | 113596989 | A | 02 November 2021 | (Family: none) | | | |
| US | 6907347 | B2 | 14 June 2005 | (Family: none) | | | |
| JP | 2019-109222 | A | 04 July 2019 | JP | 2024-20662 | A | |
| | | | | US | 2019/0186925 | A1 | |
| | | | | EP | 3499187 | A2 | |
| | | | | KR | 10-2019-0079470 | A | |
| | | | | CN | 109932738 | A | |
| US | 2022/0377561 | A1 | 24 November 2022 | EP | 4290801 | A2 | |
| | | | | EP | 4092981 | A1 | |
| US | 2007/0164897 | A1 | 19 July 2007 | WO | 2008/048337 | A2 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021160468 A